(19) Europäisches Patentamt
European Patent Office
Office européen des brevets

(11) **EP 2 131 208 B1**

(12) **EUROPEAN PATENT SPECIFICATION**

(45) Date of publication and mention
of the grant of the patent:
**23.12.2015 Bulletin 2015/52**

(51) Int Cl.:
*G01S 7/24* *(2006.01)*        *G01S 7/20* *(2006.01)*
*G01S 7/12* *(2006.01)*        *F41G 7/26* *(2006.01)*
*F41G 7/22* *(2006.01)*        *G01S 7/22* *(2006.01)*

(21) Application number: **08157499.8**

(22) Date of filing: **03.06.2008**

(54) **Display device**

Anzeigevorrichtung

Dispositif d'affichage

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**09.12.2009 Bulletin 2009/50**

(73) Proprietor: **Saab AB
581 88 Linköping (SE)**

(72) Inventor: **GIDHOLM, Sverker
589 43, LINKÖPING (SE)**

(74) Representative: **Zacco Sweden AB
P.O. Box 5581
114 85 Stockholm (SE)**

(56) References cited:
**EP-A- 0 411 309      EP-A- 1 293 799
EP-A- 1 640 740      US-B2- 6 672 534**

## Description

TECHNICAL FIELD

The present invention relates to a display device for displaying a direction of a pointing beam from a designator/senor unit mountable on a movable object.

BACKGROUND ART

In attacks with laser guided ammunitions, laser designator pods are frequently used for guiding the ammunition to a target. These laser designator pods are mounted on for example aircrafts, and are used for designating the targets. A designator axis of the pods can turn within a given operating angle range relative a longitudinal central axis of the pod. In one example, the designator axis of the pod can turn within an operating angle range of 150° in all directions. Accordingly, there is a "blind" volume behind the pod, in which the pod can not operate. In the example, wherein the pod can turn within an angle range of 150° in all directions, the blind volume is a cone having an angle of 60°. Further, as the pod is mounted on the aircraft, the aircraft itself obscures the line of sight of the pod.

A display unit inside the aircraft is operatively connected to the pod. The display unit is arranged to present the designator axis of the pod. The display unit presents in one example further an indication of a location of the target. The location of the target is in one example determined by means of sensors mounted in the pod. Further, an operating device mounted inside the aircraft is connected to the pod so as to enable manual control of the designator axis. Accordingly, the pilot can control the designator axis of the pod by means of the operating device. When supported by the information presented on the display, the operating device can be used for controlling the pod so that the designator axis points at the target. Thereafter, a tracker of the pod can be activated, said tracker being arranged to keep the designator axis of the pod locked on the target. The laser guided ammunition is fired manually or automatically either directly after the tracker has been locked on the target or based on one or a plurality of preset criteria. The preset criteria are based on information generated through target acquisition, for example by means of sensors arranged within the pod. In one example, the ammunition is fired when the distance to the target is shorter than a predetermined distance. The distance is for example measured by means of a laser range finder incorporated in the pod.

After the ammunition has been fired, it is important that the pilot understands how the designator axis of the pod is directed in relation to the aircraft (so that it is not obscured by the aircraft) and in relation to the "blind" volume behind the pod. At least in some points, when guidance of the ammunition requires laser designation during the time of flight of the ammunition, it is important that the pilot is controlling the aircraft within the operating angle range of the pod and so that the line of sight of the pod (designator axis) is not obscured by the aircraft.

This problem has been addressed by manufacturers of pods. A typical solution comprises a presentation on the display unit of a symbol related to the line of sight of the pod in relation to a z-axis of the aircraft, wherein the z-axis is defined as a direction perpendicular to a plane in which the aircraft lies. Accordingly, if the symbol is arranged on the right side of the display, the pod is pointing to the right, if the symbol is arranged to the left side of the display, the pod is pointing to the left, and so on.

EP 1 640 740 discloses a human-machine interface arranged to present a direction of a pointing axis of a vehicle, wherein a length of a pointer corresponds to an angle to a threat in relation to the horizontal plane and wherein an angular direction of the pointer is based on an angle to the threat in relation to a given direction such as the direction of the vehicle.

However, the above described solutions have some drawbacks. One drawback is that it is difficult for the pilot to understand how to manoeuvre the aircraft so as to avoid being outside the operational angle range of the pod and so as to avoid pointing the pod into the aircraft. From the presentation on the display, it will for example not be obvious for the pilot to determine whether a roll or a bunt would be required so as to avoid or escape a situation wherein the sight line of the pod to the target is obscured (either by the aircraft itself or due to being outside the operational angle range).

SUMMARY OF THE INVENTION

One object of the present invention is to provide a presentation from which a pilot would more intuitively understand how to manoeuvre the aircraft away from a situation wherein the sight line of a designator and/or sensor unit to a target is obscured.

This has in one example been achieved by means of a display device arranged to display a pointer extending from a centre of a circle having an outer circumference. The display device is characterized in that it is arranged to present a direction of a pointing axis of a target designator or sensor unit mountable on a vehicle or vehicle simulator. The target designator or sensor unit points along said pointing axis and extends along a longitudinal axis. The pointing axis is deflectable relative the longitudinal axis of the target designator or sensor unit. The length of the pointer corresponds to a deflection angle of the pointing axis relative to the longitudinal axis. An angular direction of the pointer corresponds to a direction in which the pointing axis is pitched in a coordinate system related to the vehicle or vehicle simulator.

In one option, the display device further comprises a contour representing the contour of the vehicle or vehicle simulator as viewed by the target designator or sensor unit. Then, the limitations in how the vehicle can move while keeping the pointing axis directed a target can be intuitively understood from the presentation on the display, at least after some time of training. Thus, it will be easily understood how the vehicle should be manoeuvred so as to both prevent obscuring the sight line of the target designator or sensor unit with the vehicle itself and so as to prevent being outside an operating angle range of the target designator or sensor unit.

In practice, in order to escape or avoid being outside the operative angle range of the target designator or sensor unit, the vehicle will have to pitch. Further, the vehicle will have to roll in order to escape or avoid a situation wherein the designator beam points into the vehicle itself. In using the information of the display device, the pilot of the vehicle will be able to manoeuvre the vehicle aggressively and still having control of the field of view of the target designator or sensor unit. This is very useful if it is desirable to make a heavy escape manoeuvre or to manoeuvre the vehicle to a predetermined location after having fired an ammunition. As is understood from the above, the field of view of the target designator or sensor unit is obscured both by the vehicle itself and by the limitations in the operating angle range of the target designator or sensor unit.

In one option, the outer circumference is representative of an operative angle range of the target designator or sensor unit. Thereby, it is very clearly illustrated if the pointing axis is outside its operative angle range or too close to the limit of the operational angle range.

In one option, the scale of the pointer length is enlarged when the length exceeds a predetermined value.

In one embodiment, the pointer is represented by a line such as an unbroken line.

The present invention further relates to a system onboard a vehicle. The system comprises a target designator or sensor unit extending along its longitudinal axis. The target designator or sensor unit comprises a target designator or sensor pointing along a pointing axis deflectable relative to the longitudinal axis of the target designator or sensor unit so as to have an operating angle range relative to the longitudinal axis. The target designator or sensor unit further comprises a control unit arranged to control the pointing axis to a desired direction. The system further comprises an angle determining unit arranged to determine a present deflection angle of the pointing axis relative to the longitudinal axis, and an angular direction of the pointer corresponding to a direction in which the pointing axis is pitched in a coordinate system related to the vehicle. The system further comprises a display device as described above arranged to receive information related to the determined deflection angle and the angular direction from the angle determining unit.

In one option, the target designator or sensor unit comprises a laser transmitter.

The present invention relates further to an airborne vehicle comprising a display device according to the above.

BRIEF DESCRIPTION OF THE DRAWINGS

Fig 1 shows an example of an aircraft having a designator unit according to one embodiment according to the invention.

Fig 2 is a block scheme showing the designator unit in Fig 1.

Fig 3 shows schematically an example of a pivotable unit and housing in which at least a part of the designator unit of Fig 2 is mounted.

Fig 4 illustrates an example of a "blind" volume behind the designator unit.

Fig 5 shows an example of a display device arranged to show information, which serve as a decision support for a pilot of the aircraft in Fig 1.

Fig 6 is a block scheme over a targeting system according to one embodiment of the present invention.

Fig 7 illustrates schematically an example of how a three dimensional field of regard sphere surrounding the designator/sensor unit is folded down to a two dimensional display as shown in Fig 5.

DETAILED DESCRIPTION

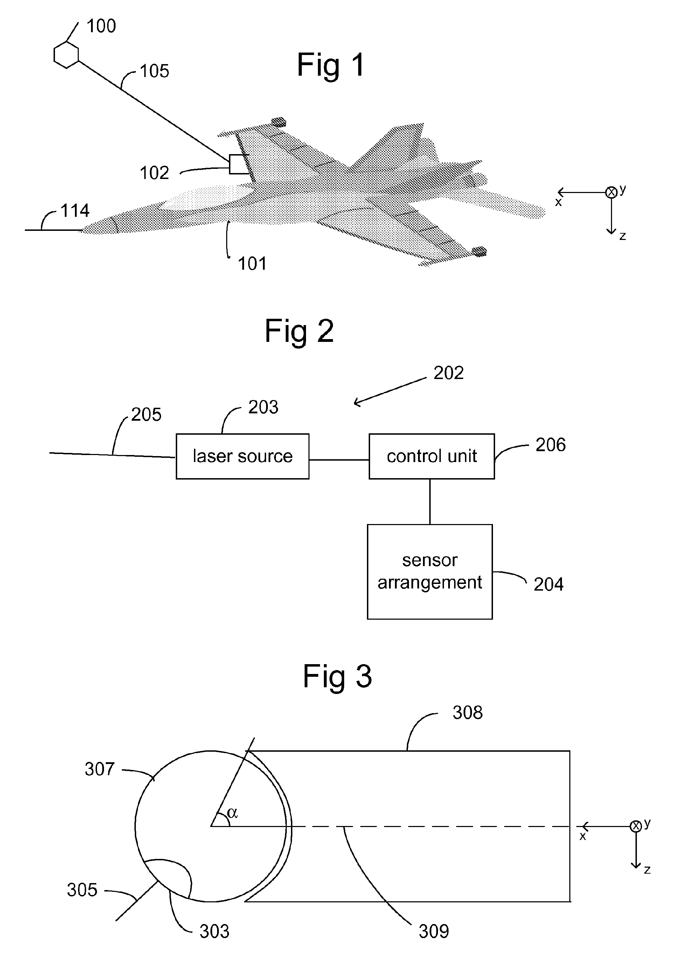

In Fig. 1, an aircraft 101 is provided with a laser designator unit 102, for example a laser designator pod (LDP). The laser designator unit 102 is arranged to provide targeting for laser guided munitions, such as laser guided bombs, missiles or precision artillery munitions. In the shown example, the laser designator unit 102 is mounted on an airborne vehicle (a fighter aircraft, a helicopter, an airborne unmanned vehicle, etc). However, the laser designator unit 102 can also be mounted on movable vehicles of other types, such as a ground vehicle, an underwater vehicle or a ship. The laser designator unit 102 is arranged to direct a laser beam along a pointing axis 105. In the shown example, the pointing axis 105 is directed at a target 100. A longitudinal central axis 114 of the aircraft goes in the shown example through the aircraft and extends through the nose in a coordinate system related to the aircraft.

A longitudinal central axis 114 of the aircraft is herein denoted the x-axis in a coordinate system related to the aircraft. The x-axis 114 of the aircraft goes in the shown example through the aircraft and extends through the nose. The x-axis and a y-axis form a plane in which the aircraft lies. A z-axis is extending perpendicularly downwards in relation to the aircraft.

In Fig. 2, the laser designator unit 202 comprises a laser source 203 arranged to emit a designator beam along the pointing axis 205. The designator beam illuminates the target 100 if the pointing axis 205 is directed at the target 100. The laser beam comprises in one example a series of coded pulses. For example in final phase control, the laser beam is, upon hitting the target, reflected by the target into the sky. A seeker on the laser guided munition is then arranged to detect the reflected beam and to control the munition towards the reflected laser beam.

The herein described example relates to a laser designator unit. However, the designator unit can be arranged emit other types of radiation, as long as a defined beam lobe is provided so as to enable designation of a target. In an alternative example, the designator unit is substituted with or supplemented with a sensor of any kind. The sensor for example an optical sensor arranged to provide an image or the like, in a direction defined by the pointing axis 205.

The laser designator unit 202 comprises further a sensor arrangement 204 for pointing the pointing axis at the target. The sensor arrangement comprises for example at least one sensor for localizing the target. The at least one sensor for localizing the target comprises for example an optical sensor such as an image generating sensor arranged to capture an image in which the target can be detected in later image processing. The image generating sensor is for example an IR sensor and/or a CCD. The localizing function can also be realized by means of a set of optical sensors, comprising for example the CCD and/or IR sensor. The sensor arrangement comprises further at least one sensor for use in tracking the target. In one example, the same sensors are used in localizing the target and tracking the target. As in the example of localizing the target, a tracking function is then provided by means of determining the pointing axis based on target identification of the target in the captured image in later image processing. The tracking function is in one example initiated after release of the laser guided ammunition. The sensor arrangement comprises for example a laser range finder (not shown) for measuring a distance to the detected target. The measured distance to the target is for example used by a control unit (will be described below) for determining when to release a laser guided ammunition from the aircraft.

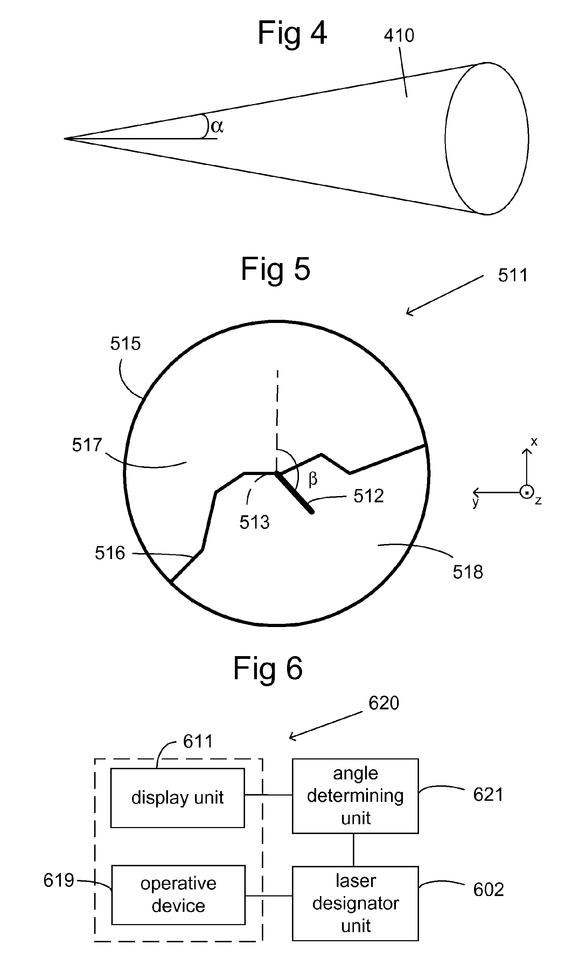

A control unit 206 is arranged to control the operation of the laser source 203. The control unit 206 is in one example arranged to receive information so as to initiate operation of the laser designation unit 202. The initiation of the laser designator unit 202 involves for example turning on the laser source 203 and/or controlling the direction of the designator axis 205. The information for initiation of the laser designator unit 202 is in one example received directly upon release of the laser guided ammunition. In one example, wherein the laser guided munition has been released from a weapon system onboard the aircraft, the initiation information can be received directly from the weapon system. In another example, wherein the laser guided munition has been released from a remote location (for example another aircraft), the initiation information is for example received by radio. The control unit 206 is arranged to control the direction of the designator beam axis based on information from the sensors 204. The control unit 206 is arranged to control the direction of the pointing axis so as to track the target with the designator beam. In a tracking mode of operation comprising the above described tracking function, the pointing axis is controlled based on the images captured by the tracking sensor(s) so as to point at the target identified in the images. In a slaving mode of operation on the other hand, the pointing axis is controlled based on a given coordinate for the target or a given direction to the target. In one example, the pilot has control means for controlling the direction of the pointing axis 205. Accordingly, the pilot will be able to control the direction of the pointing axis such that it points at the target. Thereafter, the tracking mode of operation is in one example activated such that the pointing axis will be tracking the target. This will be described in relation to Fig 6.

In Fig. 3, at least the laser source 303 of the laser designator unit is comprised in a pivotable unit 307 arranged to pivot in relation to a housing 308 to which the pivotable unit 307 is associated. The pivotable unit 307 is arranged to be freely pivotable in relation to the housing 308. When locking on the target, the above described control unit 206 is arranged to provide control signals to a servo (not shown) controlling the pivotable unit so as to steer the pivotable unit 307 to a position wherein the pointing axis 305 is directed in a desired direction. The direction of the pointing axis 305 is typically determined by some form of sensors, i.e inertial measurement sensors. In the shown example, the pivotable unit 307 is a ball or sphere. In one example, the housing 308 comprises a hollow pipe on which the pivotable unit is supported. In another example, the housing 308 is partly or wholly solid. It has in one example a cavity formed so that the ball can lie against the surface of the cavity and turn within said cavity in response to the control signals from the control unit. In one example the pivotable unit is controlled by means of roll and pitch gimbals. The pivotable unit 307 can in this example be controlled by 1) rolling the pivotable unit 307 around a longitudinal axis 309 (x-axis of fig 3) of the laser designator unit and 2) by pitching the pivotable unit 307 in a plane that is defined by the gimbal roll angle. In this example this means that the pivotable unit 307 can be controlled in the x-z plane of the coordinate system of fig 3 if the gimbal roll angle is 0 degrees and in the x-y plane if the gimbal roll angle is 90 degrees. In other words the pitch movement of the pivotable unit 307 is performed by rolling the pivotable unit around an axis that is defined by the y-axis turned by the gimbal roll angle around the x-axis of fig 3. This mechanisation of the control of the pivotable unit 307 will serve as an illustration for the following description, but the invention is not limited to this type of control of the pivotable unit. In particular, the gimbal pitch angle herein discussed related to this specific example. A more general term would be a deflection angle of the pointing axis relative to the longitudinal axis of the designator unit.

However, the housing 308 itself obscures the field of view of the laser source 303. If the laser source 303 is directed into the housing 308, the beam path of the laser beam from the laser source 303 is obstructed. In the example shown in figure 3, an obscured beam angle $\alpha$ defines the maximum angle in relation to a central axis pointing straight into the housing 308 for which the laser source 203 still points into the housing. Fig. 4 illustrates how the housing 308 give rise to the formation of a cone shaped volume 410 behind the laser designator unit for which the field of view is obstructed in one example, wherein the cross section of the housing is substantially circular shaped.

In order to make it possible for the laser designator unit to illuminate the target 100, the aircraft has to be controlled so that the beam path of the laser designator beam from the laser source is not obstructed by the housing 308.

Also the aircraft 101 obstructs the beam path of the laser beam. Accordingly, in order to make it possible for the laser designator unit to illuminate the target 100, the aircraft has to be controlled so that the laser designator beam from the laser source is not obstructed by the aircraft 101.

In Fig. 5, a display unit 511 is presented, arranged to show information, which serve as a decision support for a pilot of the aircraft 101. The decision support is intended for supporting the pilot in decision making regarding how to control the aircraft so that the beam path of the laser designator beam from the laser designator unit (i.e. the pointing axis) is neither obscured by the housing 308 of the laser designator unit nor by the aircraft 101 itself.

The display unit 511 is arranged to display a pointer 512 extending from a centre 513 of a circle. The length $l$ of the pointer 512 is a function of the previously described gimbal pitch angle. Accordingly, the length $l$ of the pointer is influenced by aircraft manouvers affecting the x-axis of the aircraft i.e typically pitch or in some cases yaw manouvers..The length $l$ of the pointer is in one example proportional to the gimbal pitch angle and in another example defined by another function of the gimbal pitch angle. The angle a corresponds to the previously described gimbal roll angle

The laser designator unit 202 is in the herein described example mounted in relation to the aircraft such that the longitudinal axis of the volume 410 obscured by the housing is parallel with the moving axis 114 of the aircraft 101. Accordingly, the laser designator unit is obscured when the length $l$ of the pointer 512 corresponds to a gimbal pitch angle b = $180° - \alpha$ or longer, wherein the angle $\alpha$ is the above described obscured beam angle. In the shown example, an outer circumference 515 of the circle represents the angle $180° - \alpha$. In one example, the length $l$ of the pointer 512 can extend beyond the outer circumference 515 of the circle when the gimbal pitch angle b exceeds the angle $180° - \alpha$. In another example, the maximum length of the pointer equals the length corresponding to a gimbal pitch angle b value of $180° - \alpha$ for all gimbal pitch angles b exceeding the value $180° - \alpha$. For example, when the angle $\alpha$ equals $30°$, the outer circumference has a radius corresponding to the angle $150°$. In one example, the length $l$ of the pointer is directly proportional to the gimbal pitch angle b. In another example, , $l = k\,b$, wherein $k$ is a variable scale factor so that a higher accuracy is provided close to the outer circumference 515 and a lower accuracy is provided close to the centre. In one example, a breakpoint for the higher accuracy and low accuracy is at half the radius of the circle. Alternatively, the scale factor is chosen such that the accuracy is continuously increasing as the length $l$ of the pointer increases. For clarification, the term high accuracy refers to use of an enlarged scale.

The display device 511 is further arranged to display a mask for the aircraft. A border 516 of the mask defines an area 517 behind which the laser designator unit points into the aircraft. The procedure for determining the mask of the aircraft is known in the art and will not be discussed in detail herein. However, it is clear that the design of the mask is dependent on where on the aircraft the designator unit is positioned, on the type of aircraft and on external stores attached to the aircraft.

In the shown example, from the location of the area 517 obscured by the aircraft, it can be concluded that the designator unit is mounted on the right side of the aircraft. When the pointer 512 is within an area 518 with free sight to the target, the designator unit will be able to point at the target.

In Fig. 6, a targeting system 620 comprises the laser designator unit 602, the display unit 611, an angle determining unit 621 and an operating device 619. The display unit 611 is visible to the pilot of the aircraft. It is for example arranged on the instrument panel of the aircraft. In an alternative or additional example, the display image is displayed on a so called Head Up Display (HUD).

The angle determining unit 621 is in one example arranged in the aircraft and in association with the display unit 611. In one example, it is integrated with the display unit. Alternatively, the angle determining unit is arranged in association with the designator unit 602, either integrated with the designator unit 602 or formed as a separate physical entity communicating with the designator unit. The laser designator unit 602, angle determining unit 621, display unit 611 and operating device 619 communicate via a wire channel or a wireless channel.

The angle determining unit 621 is arranged to receive information from the designator unit 602 related to the direction of the pointing axis. In one example, the direction of the pointing axis is given as a vector

$$v = \begin{pmatrix} x \\ y \\ z \end{pmatrix}$$ in the above described coordinate system related to the aircraft.

The angle determining unit 621 is then arranged to calculate the length *l* of the pointer as a function of the previously described gimbal pitch angle.

The designator unit 602 is, as described above, arranged to feed information related to the direction of the pointing axis to the angle determining unit 621. In one example, the information related to the direction of the pointing axis is based on the positioning of the pivotable unit 307 in relation to the housing 308 to which the pivotable unit 307 is associated (as described in relation to Fig 3). Thus, the information from the designator unit 602 related to the rotational position of the laser source 203 of the pivotable unit 307 is used as input data related to the pointing axis. The information related to the rotational position of the laser source of the pivotable unit is in one example converted to the coordinate system related to the aircraft so as to provide the vector *v*. If the designator unit is not completely aligned with the x-axis of the aircraft, the angle determining unit can also be provided with information related to the misalignment between the x-axis of the aircraft and then longitudinal direction 309 of the laser designator unit 202. That information is for example stored in a memory (not shown) connected to the angle determining unit 621. If misalignment information is available, the angle determining unit is in one example arranged to adjust the information from the designator unit 602 related to the rotational position of the laser source 203 of the pivotable unit 307 so as to be related to the coordinate system described above related to the aircraft.

The angle determining unit 621 is in one example arranged to calculate the gimbal pitch angle b as

$$b = \arccos\left(\frac{x}{\rho}\right),$$

wherein

$$\rho = \sqrt{x^2 + y^2 + z^2}$$

The length of the pointer *l* is then determined as a function of b. In one example, the gimbal pitch angle b is multiplied with a constant scaling factor *k* so as to provide the length *l*. In another example, the scaling factor can be chosen such that the scale is enlarged for larger values of the gimbal pitch angle b and reduced for smaller values of the gimbal pitch angle b. In one example if the radius of the display device in fig 5 is 2 degrees the length *l* is chosen as

$$l = \begin{cases} \dfrac{b}{120} & when \quad b \le \dfrac{2\pi}{3} \\[2ex] \dfrac{\pi}{180} + \dfrac{1}{30} \cdot (b - \dfrac{2\pi}{3}) & when \quad b > \dfrac{2\pi}{3} \end{cases}$$

Accordingly, the length *l* of the pointer will be less sensitive up to gimbal pitch angles up to 120 degrees and more sensitive when the gimbal pitch angle is between 120 and 150 degrees to allow precise control close to the gimbal pitch limit. The mask area 517 is obviously scaled accordingly in this example.

The gimbal roll angle a as previously defined has the relation to the target vector as:

$$\tan a = \frac{-y}{z}$$

with appropriate actions taken regarding the different quadrants and divisions by zero. This angle will always be displayed as the true angle a in the display device 515 to show to an operator the true direction that the pivotable unit is pitched in order to point at the target.

The angle determining unit 621 is arranged to provide the length *l* information and the angle a information to the display device 611 for updating the displayed information. The angle determining unit is arranged to continuously update the calculation of the length *l* information and the angle a information. The updated information related to the length of the pointer and the angle a is fed to the display device so as to update the length and angle of the pointer.

The display device 611 presents in one example further an indication of a location of the target (not shown) The location of the target is in one example determined by means of the sensor arrangement 204 in the laser designator unit 602. The operating device 619 is mounted inside the aircraft. The operating device is operatively connected to the laser designator unit 602 so as to enable manual control of the pointing axis 305. Accordingly, the pilot can control the pointing axis of the laser designator unit 602 by means of the operating device 619. When supported by the information presented on the display unit 611, the operating device 619 can be used for controlling the laser designator unit 602 so that the pointing axis points at the target. Thereafter, a tracker (not shown) of the laser designator unit 602 can be activated by means of the operating device 619, said tracker being arranged to keep the pointer axis of the designator unit 602 locked on the target. The laser guided ammunition is fired manually or automatically either directly after the tracker has been locked on the target or based on one or a plurality of preset criteria. The preset criteria can be based on information generated through target acquisition, for example by means of the sensors arranged within the laser designator unit 602. In one example, the ammunition is fired when the distance to the target is shorter than a predetermined distance. The distance is for example measured by means of a laser range finder incorporated in the designator unit 602

After the ammunition has been fired, it is important that the pilot understands how the designator axis of the laser designator unit 602 is directed in relation to the aircraft (so that it is not obscured by the aircraft) and in relation to the "blind" volume behind the laser designator unit 602. At least in some points, when control of the ammunition requires laser designation during the time of flight of the ammunition, it is important that the pilot is controlling the aircraft within the operating angle range of the designator unit and so that the line of sight of the designator unit (designator axis) is not obscured by the aircraft.

It shall be understood that usually, the target does not need to be designated during the entire flight of the ammunition. In one example, the laser source 203 is active so as to designate the target only during final phase control. The control of the laser source is in one example provided automatically based on some set criteria. In another example, the pilot has access to operating controls so as to control the laser source. In one example, the control unit 206 is arranged to shut down the laser source when the designator unit is pointing at the aircraft (for example as defined by the herein described mask 516).

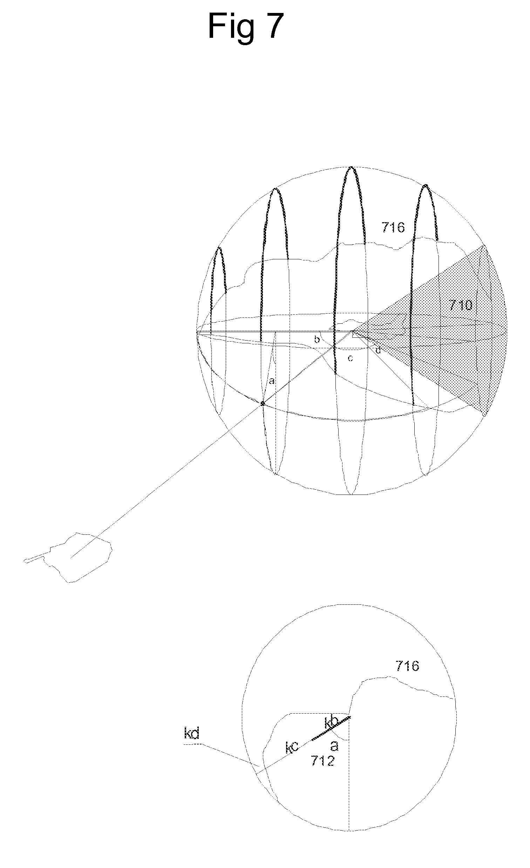

In fig 7, the information displayed on the display unit is illustrated. In the shown example, the sensor unit has rolled 60° in a clockwise direction. This is indicated by an angle *a*. Further, the sensor unit has been displaced 60° in relation to the central axis of the designator unit obliquely downwards to the left. This is indicated by an angle *b*. The angle *c* indicates the distance to the mask 716 in the plane defined by the roll angle of the designator unit. The angle *d* shows the angle in the same plane, wherein the line of sight is obscured by the aircraft (as defined by the mask 716), and wherein the designator unit operates within its operative angle range (the non-operative angle range is defined by the cone 710).

**Claims**

1.  Display device (511, 611) arranged to display a pointer (512) extending from a centre (513) of a circle having an outer circumference (515), *characterized in that* the display device (511, 611) is arranged to present a direction of a pointing axis (105, 205, 305) of a target designator or sensor unit (102, 202, 602) mountable on a vehicle or vehicle simulator (101), said target designator or sensor unit (102, 202, 602) pointing along said pointing axis (105, 205, 305) and extending along a longitudinal axis (309), wherein the pointing axis (105, 205, 305) being deflectable relative the longitudinal axis of the target designator or sensor unit (102, 202, 602), **in that** the length of the pointer (512) corresponds to a deflection angle (b) of the pointing axis relative to the longitudinal axis (309), and **in that** an angular direction (a) of the pointer corresponds to a direction in which the pointing axis (105, 205, 305) is pitched in a coordinate system related to the vehicle or vehicle simulator (101).

2.  Display device according to claim 1, *characterized in that* the outer circumference (515) is representative of an operative angle range of the target designator or sensor unit (102, 202, 602).

3.  Display device according to any of the preceding claims, *characterized in that* the pointer (512) is represented by a line.

4.  Display device according to claim 3, *characterized in that* the line is an unbroken line.

5.  Display device according to claim 2, *characterized in that* the scale of the pointer (512) length is enlarged when the length exceeds a predetermined value.

6.  Display device according to any of the preceding claims, *characterized in that* it comprises a contour (516) representing the contour of the vehicle or vehicle simulator (101) as viewed by the target designator or sensor unit (102, 202, 602).

7.  System (620) onboard a vehicle (101) comprising a target designator or sensor unit (102, 202, 602) extending along its longitudinal axis (309) and comprising
    a target designator or sensor (203) pointing along a pointing axis (205) deflectable relative to the longitudinal axis (309) of the target designator or sensor unit (102, 202, 602) so as to have an operating angle range relative to the longitudinal axis and
    a control unit (206) arranged to control the pointing axis (205) to a desired direction,
    an angle determining unit (621) arranged to determine a present deflection angle (b) of the pointing axis (205) relative to the longitudinal axis (309), and an angular direction (a) of the pointer corresponding to a direction in which the pointing axis (205) is pitched in a coordinate system related to the vehicle (101), and
    a display device (511, 611) according to any of the claims 1-6 arranged to receive information related to the determined deflection angle (b) and the angular direction (a) from the angle determining unit (621).

8. System according to claim 7, *characterized in* that the target designator or sensor unit comprises a laser transmitter.

9. Airborne vehicle comprising a display device (511, 611) according to any of the claims 1-6.

**Patentansprüche**

1. Anzeigevorrichtung (511, 611), die so eingerichtet ist, dass sie einen Zeiger (512) anzeigt, der sich von einem Mittelpunkt (513) eines Kreises aus erstreckt, der einen Außenumfang (515) hat, **dadurch gekennzeichnet, dass** die Anzeigevorrichtung (511, 611) so eingerichtet ist, dass sie eine Richtung einer Zeige-Achse (105, 205, 305) einer Ziel-Kennzeichnungseinrichtung oder einer Sensor-Einheit (102, 202, 602) darstellt, die an einem Fahrzeug oder einem Fahrzeug-Simulator (101) angebracht werden kann, wobei die Ziel-Kennzeichnungseinrichtung oder die Sensor-Einheit (102, 202, 602) entlang der Zeige-Achse (105, 205, 305) zeigt und sich entlang einer Längsachse (309) erstreckt, die Zeige-Achse (105, 205, 305) relativ zu der Längsachse der Ziel-Kennzeichnungseinrichtung oder der Sensor-Einheit (102, 202, 602) abgelenkt werden kann, **dadurch,** dass die Länge des Zeigers (512) einem Ablenkwinkel (b) der Zeige-Achse relativ zu der Längsachse (309) entspricht, und **dadurch,** dass eine Winkelrichtung (a) des Zeigers einer Richtung entspricht, in der die Zeige-Achse (105, 205, 305) in einem Koordinatensystem steht, das sich auf das Fahrzeug oder den Fahrzeug-Simulator (101) bezieht.

2. Anzeigevorrichtung nach Anspruch 1, **dadurch gekennzeichnet, dass** der Außenumfang (515) repräsentativ für einen Arbeits-Winkelbereich der Ziel-Kennzeichnungseinrichtung oder der Sensor-Einheit (102, 202, 602) ist.

3. Anzeigevorrichtung nach einem der vorangehenden Ansprüche, **dadurch gekennzeichnet, dass** der Zeiger (512) durch eine Linie dargestellt wird.

4. Anzeigevorrichtung nach Anspruch 3, **dadurch gekennzeichnet, dass** die Linie eine durchgehende Linie ist.

5. Anzeigevorrichtung nach Anspruch 2, **dadurch gekennzeichnet, dass** der Maßstab der Länge des Zeigers (512) vergrößert wird, wenn die Länge einen vorgegebenen Wert übersteigt.

6. Anzeigevorrichtung nach einem der vorangehenden Ansprüche, **dadurch gekennzeichnet, dass** sie eine Kontur (516) umfasst, die die Kontur des Fahrzeugs oder des Fahrzeug-Simulators (101), von der Ziel-Kennzeichnungseinrichtung oder der Sensor-Einheit (102, 202, 602) aus gesehen, darstellt.

7. System (620) an Bord eines Fahrzeugs (101), das umfasst:

eine Ziel-Kennzeichnungseinrichtung oder eine Sensor-Einheit (102, 202, 602), die sich entlang seiner Längsachse (309) erstreckt und umfasst:

eine Ziel-Kennzeichnungseinrichtung oder einen Sensor (203), die/der entlang einer Zeige-Achse (205) zeigt, die relativ zu der Längsachse (309) der Ziel-Kennzeichnungseinrichtung oder der Sensor-Einheit (102, 202, 602) zeigt und einen Arbeits-Winkelbereich relativ zu der Längsachse hat, und
eine Steuereinheit (206), die so eingerichtet ist, dass sie die Zeige-Achse (205) auf eine gewünschte Richtung steuert,

eine Winkel-Bestimmungseinheit (621), die so eingerichtet ist, dass sie einen aktuellen Ablenkwinkel (b) der Zeige-Achse (205) relativ zu der Längsachse (39) sowie eine Winkelrichtung (a) des Zeigers bestimmt, die einer Richtung entspricht, in der die Zeige-Achse (205) in einem Koordinatensystem steht, das sich auf das Fahrzeug (101) bezieht, und
eine Anzeigevorrichtung (511, 611) nach einem der Ansprüche 1-6, die so eingerichtet ist, dass sie Informationen, die sich auf den bestimmten Ablenkwinkel (b) sowie die Winkelrichtung (a) beziehen, von der Winkel-Bestimmungseinheit (621) empfängt.

8. System nach Anspruch 7, **dadurch gekennzeichnet, dass** die Ziel-Kennzeichnungseinrichtung oder die Sensoreinheit einen Lasersender umfasst.

9. Luftfahrzeug, das eine Anzeigevorrichtung (511, 611) nach einem der Ansprüche 1-6 umfasst.

**Revendications**

1. Dispositif d'affichage (511, 611) agencé pour afficher un pointeur (512) s'étendant depuis un centre (513) d'un cercle ayant une circonférence externe (515), *caractérisé en ce que* le dispositif d'affichage (511, 611) est agencé pour présenter une direction d'un axe de pointage (105, 205, 305) d'une unité d'indicateur ou de capteur de cible (102, 202, 602) qui peut être montée sur un véhicule ou un simulateur de véhicule (101), ladite unité d'indicateur ou de capteur de cible (102, 202, 602) pointant le long dudit axe de pointage (105, 205, 305) et s'étendant le long d'un axe longitudinal (309), dans lequel l'axe de pointage (105, 205, 305) peut être dévié par rapport à l'axe longitudinal de l'unité d'indicateur ou de capteur de cible (102, 202, 602), **en ce que** la longueur du pointeur (512) correspond à un angle de déviation (b) de l'axe de pointage par rapport à l'axe longitudinal (309) et **en ce qu'**une direction angulaire (a) du pointeur correspond à une direction dans laquelle l'axe de pointage (105, 205, 305) est fixé dans un système de coordonnées se rapportant au véhicule ou au simulateur de véhicule (101).

2. Dispositif d'affichage selon la revendication 1, *caractérisé en ce que* la circonférence externe (515) est représentative d'une plage d'angle fonctionnel de l'unité d'indicateur ou de capteur de cible (102, 202, 602).

3. Dispositif d'affichage selon l'une quelconque des revendications précédentes, *caractérisé en ce que* le pointeur (512) est représenté par une ligne.

4. Dispositif d'affichage selon la revendication 3, *caractérisé en ce que* la ligne est une ligne continue.

5. Dispositif d'affichage selon la revendication 2, *caractérisé en ce que* l'échelle de la longueur du pointeur (512) est agrandie lorsque la longueur dépasse une valeur prédéterminée.

6. Dispositif d'affichage selon l'une quelconque des revendications précédentes, *caractérisé en ce qu'*il comprend un contour (516) représentant le contour du véhicule ou du simulateur de véhicule (101) comme cela est vu par l'unité d'indicateur ou de capteur de cible (102, 202, 602).

7. Système (620) embarqué dans un véhicule (101) comprenant
une unité d'indicateur ou de capteur de cible (102, 202, 602) s'étendant le long de son axe longitudinal (309) et comprenant :

   un indicateur ou un capteur de cible (203) pointant le long d'un axe de pointage (205) qui peut dévier par rapport à l'axe longitudinal (309) de l'unité d'indicateur ou de capteur de cible (102, 202, 602) pour avoir une plage d'angle de fonctionnement par rapport à l'axe longitudinal et
   une unité de commande (206) agencée pour commander l'axe de pointage (205) dans une direction souhaitée,
   une unité de détermination d'angle (621) agencée pour déterminer un angle de déviation actuel (b) de l'axe de pointage (205) par rapport à l'axe longitudinal (309), et une direction angulaire (a) du pointeur correspondant à une direction dans laquelle l'axe de pointage (105) est fixé dans un système de coordonnées se rapportant au véhicule (101), et
un dispositif d'affichage (511, 611) selon l'une quelconque des revendications 1 à 6 agencé pour recevoir des informations se rapportant à l'angle de déviation déterminé (b) et à la direction angulaire (a) qui proviennent de l'unité de détermination d'angle (621).

8. Système selon la revendication 7, *caractérisé en ce que* l'unité d'indicateur ou de capteur de cible comprend un émetteur laser.

9. Véhicule aéroporté comprenant un dispositif d'affichage (511, 611) selon l'une quelconque des revendications 1 à 6.

# Fig 1

# Fig 2

# Fig 3

# Fig 4

410

α

# Fig 5

511

515

517

516

513

β

512

518

x
y z

# Fig 6

620

611

| display unit | angle determining unit | 621 |

619

| operative device | laser designator unit | 602 |

# Fig 7

**EP 2 131 208 B1**

**REFERENCES CITED IN THE DESCRIPTION**

**Patent documents cited in the description**

- EP 1640740 A